# Europäisches Patentamt
# European Patent Office
# Office européen des brevets

(11) Publication number: **0 139 979**
**B1**

(12) EUROPEAN PATENT SPECIFICATION

(45) Date of publication of patent specification: 09.11.88

(21) Application number: **84109953.4**

(22) Date of filing: **21.08.84**

(51) Int. Cl.⁴: **G 02 B 7/02**

(54) Optical assemblies.

(30) Priority: **19.10.83 US 543568**

(43) Date of publication of application:
**08.05.85 Bulletin 85/19**

(45) Publication of the grant of the patent:
**09.11.88 Bulletin 88/45**

(84) Designated Contracting States:
**DE FR GB NL**

(56) References cited:
**FR-A-1 559 574**
**GB-A-1 494 133**
**US-A-2 240 827**
**US-A-4 088 396**

(73) Proprietor: **THE PERKIN-ELMER CORPORATION**
**761 Main Avenue**
**Norwalk Connecticut 06856-0181 (US)**

(72) Inventor: **Selger, Ken**
**43 Saunders Lane**
**Ridgefield Connecticut 06877 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The invention relates to a method of aligning an optical element having first and second substantially spherical surfaces, and an adjacent spacer. The inventive method is especially applicable to the actual alignment of lens systems. Among many other possible uses, the method according to the invention is particularly suited for constructing fine guidance sensors and optical control sensors for space telescopes.

Optical assemblies require precise alignment of their individual elements. This is accomplished through the use of mechanical devices such as cells and spacers. The spacers provide a fixed non-adjustable axial space between elements which maintain the alignment. This invention performs this task and in addition eleminates element tilt, decenter, wedge and surface distortion. The invention also provides additional control of thermal performance.

The objects of this invention include substantial elimination of the decenter error in optical element assemblies, substantial elimination of the tilt error in optical elements and substantial elmination of wedge in spacers and optical elements. Other objects include the provision for accurate and stable axial spacing of the optical elements, reduction or elimination of surface bending or deformation due to loads, and control of the thermal expansion character of spacers between optical elements.

Briefly, the present invention is directed to a new method as stated above, comprising the steps of manufacturing a spacer having a first and a second mating surface, said first surface being a matched surface with respect to the second surface of said optical element; providing the spacer with a central aperture; and mounting said spacer so that the spacer's first surface is in contact with the second surface of the optical element, subsequently adjusting the spacer position while maintaining contact between the two surfaces until the axis passing through the two centres of curvature of the spacer is coincident with the optical axis of the element, whereby the optical element and the spacer are substantially perfectly aligned.

The spacer's first surface and the second surface of the optical element are optically identical mating surfaces, generally spherical, with one surface concave and the mating surface convex with a common centre of curvature. The alignment is controlled by rotating the spacer around the common surface centre of curvature of the second surface of the optical element until the axes are coincident. The spacer has a central hole of sufficient diameter to pass the optical beam without vignetting.

In accordance with a first preferred embodiment, the spacer is fabricated from glass.

According to a further preferred embodiment, substantially the last operation in the fabrication of the spacer is forming said central aperture by removing a central core, thereby providing a permanent record of the thickness of the spacer.

According to the invention, a new optical assembly through the use of a spacer with spherical surfaces is provided. The spacer surfaces are exact mates to the optical element surfaces the spacer separates.

Thus, a spacer with a convex surface is a mate for a concave lens with the same radius. The spacer has an optical axis similar to an optical element. This axis is defined as a line joining the centers of curvature of the two surfaces. Ideal alignment of the spacer places this axis coincident with the axis of the optical elements. Thus a common axis is formed. Any number of additional spacers and lenses may be added with each new piece aligned to the same axis. The position of this alignment is only limited by the ability to locate the axis of each element or spacer. As a consequence, structural distortion of the optical surface is eliminated due to even distribution of load. The selection of spacer material permits the control of thermal characteristics of each assembly.

Several embodiments of the invention have been chosen for purposes of illustration and description, and are shown in the accompanying drawings, forming a part of the specification.

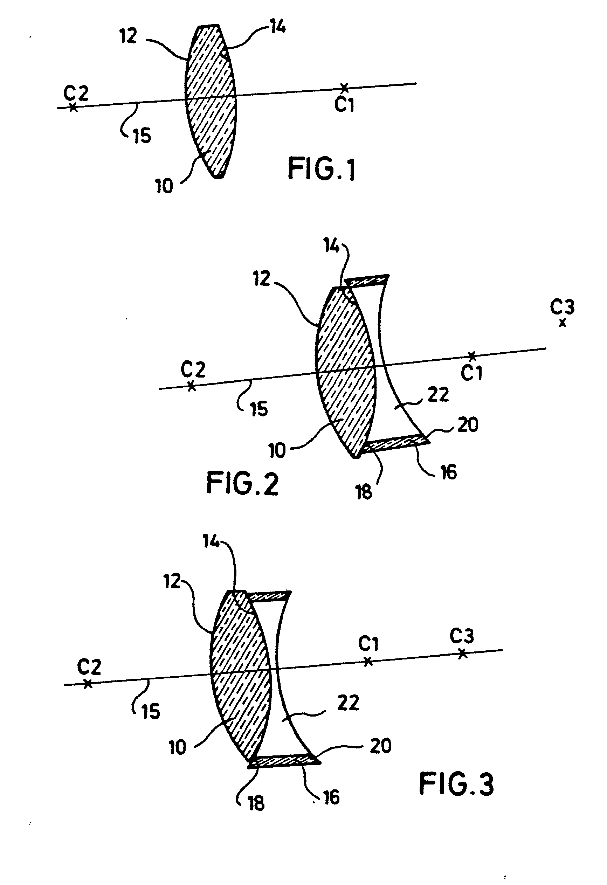

Figures 1 to 3 are schematic illustrations showing a series of steps in a method for supporting and locating optical elements in their axial location, according to the invention.

In one embodiment of the invention, a method of supporting and locating optical elements in their axial location comprises the steps of taking an optical element 10, Figure 1 having a first center of curvature C1 for a first surface 12, and a second center of curvature C2 for a second surface 14, with the element's axis 15 passing through the two centers of curvature C1, C2. Next, the method comprises the steps of taking a spacer device 16, Figure 2, having a first surface 18 and a second surface 20, said first surface 18 being a matched mating surface with respect to the second surface 14 of the optical element 10. The spacer 16 is mounted as shown in Figure 2 so that the center of curvature of the spacer's first surface 18 is coincident at C2 with the second center of curvature of the optical element 10. The spacer's second center of curvature, indicated at C3 in Figure 2, is initially not on the optical element's axis 15. Thereafter, the spacer 16 is rotated about said second center of curvature C2 of the optical element 10 until the spacers second center of curvature C3 is coincident with the optical element's axis 15 as shown in Figure 3. As a result additional optical elements and spacers can be added by repeating the procedure and thus maintaining the alignment. The result is a lens assembly where all elements have a common axis, although each element has errors of centering and wedge.

Thus, it is seen that the spacer devices, made of a suitable, stable material such as glass, for example, are inserted between optical elements as a means of supporting and locating the elements in their axial location. Material selection of the spacer is based upon thermal and manufacturing considerations. The surfaces of the spacer match the surfaces of the mating element and it has a large central aperture or hole 22, Figures 2 and 3, to permit light to pass through unimpeded. The aperture diameter is equal to or larger than the clear aperture of the mating element.

The spacer, preferably with spherical surfaces, is made exactly like a lens. The same test plates are used to fabricate the spacer as are used to make the mating lenses. The radius match can be held to any level of precision desired. During the manufacturing process the center thickness of the spacer is monitored. This thickness is the distance specified by the optical designer for that optical system. The distance is measured directly and not inferred by calculation as in the case with prior conventional spacers.

In addition, the last operation in the spacer manufacturing cycle is the removal of the center core. This core is saved and provides a permanent record of the thickness of that spacer.

Occasionally, it is important to thermally control element-to-element spacing in an optical system. The use of metallic spacers provide the designer with one or two material choices for matching the coefficient of thermal expansion to that of glass. The use of glass spacers gives the designer a wide variety of choices in thermal expansion equal to or near that of the lenses in the assembly, and in fact with the recent advent of non-expanding material the designer may choose a zero expansion coefficient if that is a desirable characteristic.

While the advantages of using glass spacers are several, it should be pointed out that many of the advantages of the invention are independent of the material.

Metallic spacers can provide many of the same advantages, and only in certain circumstances, such as that involving control of thermal expansion, for example, do they necessitate the use of glass. The making of a glass spacer, preferably with spherical surfaces, has the unique advantage that the radius of the spacer can be matched to its mating optical element to a very high degree of precision. This is due to the fact that parts can be made as a matched set. The spacer surface can be produced to optical tolerances, approximately one hundred times the tolerance of that of a machined part.

It will thus be seen that the present invention does indeed provide a new and improved method of supporting and locating optical elements in their axial positon, which effectively meets the objects mentioned hereinbefore.

## Claims

1. A method of aligning an optical element having first and second substantially spherical surfaces and an adjacent spacer, characterized by the steps of:
manufacturing a spacer having a first and a second mating surface, said first surface being a matched surface with respect to the second surface of said optical element,
providing the spacer with a central aperture,
mounting said spacer so that the spacer's first surface is in contact with the second surface of the optical element, subsequently adjusting the spacer position while maintaining contact between the two surfaces until the axis passing through the two centres of curvature of the spacer is coincident with the optical axis of the element, whereby the optical element and the spacer are substantially perfectly aligned.

2. A method according to claim 1 characterized in that said spacer is fabricated from glass.

3. A method according to claim 1 characterized in that said central aperture is provided by removing a central core, thereby providing a permanent record of the thickness of the spacer.

## Patentansprüche

1. Verfahren zum Ausrichten eines optischen Elements, das erste und zweite, im wesentlichen sphärische Flächen und ein angrenzendes Distanzstück aufweist, gekennzeichnet durch die Schritte:
es wird ein Distanzstück hergestellt, das eine erste und eine zweite Paßfläche hat, wobei die erste Fläche an die zweite Fläche des optischen Elements angepaßt ist;
im Distanzstück wird eine zentrale Öffnung ausgebildet;
es wird das Distanzstück so angeordnet, daß die erste Fläche des Distanzstückes in Kontakt mit der zweiten Fläche des optischen Elementes ist, wobei daraufhin das Distanzstück unter Aufrechterhaltung des Kontakts zwischen den beiden Flächen eingestellt wird, bis die durch die beiden Krümmungszentren des Distanzstrückes verlaufende Achse mit der optischen Achse des Elements zusammenfällt, wodurch das optische Elements und das Distanzstück im wesentlichen perfekt zueinander ausgerichtet sind.

2. Verfahren nach Anspruch 1, dadurch gekennzeichnet, daß das Distanzstück aus Glas hergestellt ist.

3. Verfahren nach Anspruch 1, dadurch gekennzeichnet, daß die zentrale Öffnung durch Entfernen erines zentralen Kerns erzeugt wird, wodurch eine dauerhafte Aufzeichnung der Dicke des Distanzelements erhalten wird.

## Revendications

1. Une méthode pour aligner un élément optique ayant une première et une seconde surfaces sensiblement sphériques, et une entretoise adja-

cente, caractèrisée par les étapes de:

fabrication d'une enetretoise ayant une première et une seconde surfaces de contact, ladite première surface étant une surface adaptée à la seconde surface dudit élément optique;

création d'une ouverture centrale dans l'entretoise,

montage de ladite entretoise de telle sorte que la première surface de l'intretoise soit en contact avec la seconde surface de l'élément optique, ajustant par conséquent la position de l'entretoise tout en maintenant le contact entre les deux surfaces, jusqu'à ce que l'axe traversant les deux centres de coubure de l'entretoise coincide avec l'axe optique de l'élément, d'où il résulte que l'élément optique et l'entretoise sont sensiblement parfaitement alignés.

2. Une méthode selon la revendication 1 caractérisée par le fait que ladite entretoise est fabriquée en verre.

3. Une méthode selon la revendication 1 caractérisée par le rait que ladite ouverture centrale est réalisée par enlèvement d'un noyau central, ce qui a pour résultat de donner une indication permanente de l'épaisseur de l'entretoise.

FIG.1

FIG.2

FIG.3